(19) Europäisches Patentamt
European Patent Office
Office européen des brevets

(11) **EP 2 537 060 B1**

(12) **EUROPÄISCHE PATENTSCHRIFT**

(45) Veröffentlichungstag und Bekanntmachung des Hinweises auf die Patenterteilung:
**29.05.2013 Patentblatt 2013/22**

(21) Anmeldenummer: **11706746.2**

(22) Anmeldetag: **16.02.2011**

(51) Int Cl.:
*G02B 15/00* (2006.01)     *G02F 1/29* (2006.01)
*G02F 1/31* (2006.01)     *G02B 13/00* (2006.01)

(86) Internationale Anmeldenummer:
**PCT/EP2011/000739**

(87) Internationale Veröffentlichungsnummer:
**WO 2011/101130 (25.08.2011 Gazette 2011/34)**

(54) **ABBILDUNGSSYSTEM**

IMAGING SYSTEM

SYSTÈME D'IMAGERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2010 DE 102010008342**

(43) Veröffentlichungstag der Anmeldung:
**26.12.2012 Patentblatt 2012/52**

(73) Patentinhaber: **Jos. Schneider Optische Werke GmbH**
**55543 Bad Kreuznach (DE)**

(72) Erfinder: **WANG, Lingli**
**55543 Bad Kreuznach (DE)**

(74) Vertreter: **Köllner, Malte**
**Köllner & Partner**
**Patentanwälte**
**Vogelweidstrasse 8**
**60596 Frankfurt am Main (DE)**

(56) Entgegenhaltungen:
**EP-A1- 0 535 402      WO-A2-2007/055742**
**US-A1- 2002 181 126      US-A1- 2004 108 984**

**Beschreibung**

Gebiet der Erfindung

Die Erfindung betrifft ein Abbildungssystem zum Abbilden eines Objektes auf einen Bildsensor.

Stand der Technik

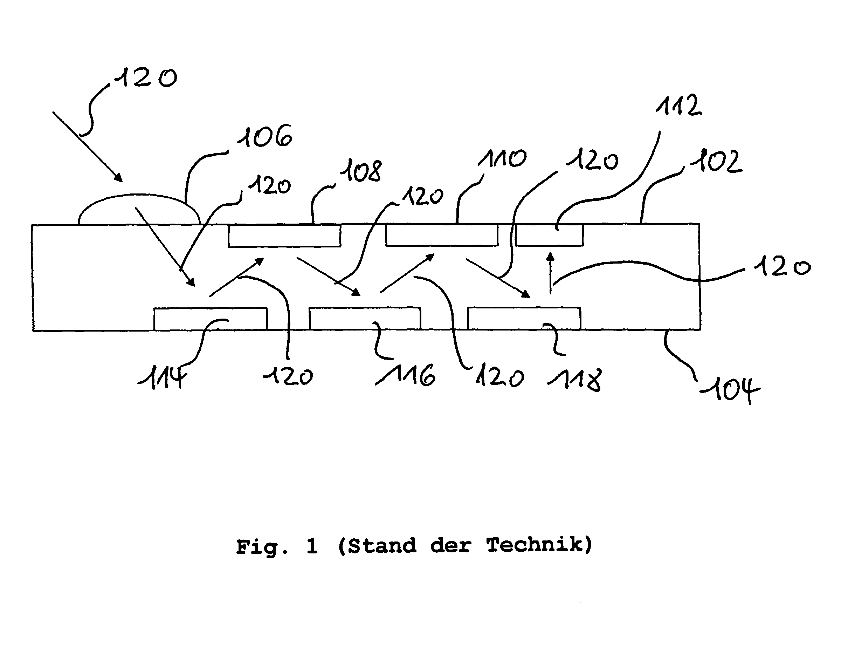

Der Trend bei der Entwicklung optischer Module, insbesondere für Mobilfunk-Geräte (Handys), geht zunehmend in Richtung einer sehr flachen Bauweise. Dabei wird zunehmend ein Aufbau bevorzugt, in dem eine Mehrzahl von optischen Elementen mit ausgewählten refraktiven, diffraktiven, transmissiven oder reflektiven Eigenschaften miteinander kombiniert werden, um den gewünschten Strahlengang zu realisieren und eine Abbildung auf einem Bildsensor zu erzeugen (s. Fig. 1; oder z. B. J. Jahns: "Integrated optical imaging system", Appl. Opt. 29 (1990) 1998).

Die ständig steigenden Anforderungen, die an den möglichst flachen Aufbau der Module gestellt sind, setzen jedoch Grenzen für die bisher verwendeten Vorrichtungen und Systeme insbesondere auch in Hinblick auf die Variabilität der Brennweite.

Aufgabe

Aufgabe der Erfindung ist es, ein Abbildungssystem zum Abbilden eines Objekts auf einen Bildsensor vorzuschlagen, welches eine sehr flache Bauweise in Kombination mit der Realisierung von mindestens zwei unterschiedlichen Brennweiten aufweist.

Lösung

Diese Aufgabe wird durch die Erfindung mit den Merkmalen des unabhängigen Anspruchs gelöst. Vorteilhafte Weiterbildungen der Erfindung sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Im Folgenden wird das Abbildungssystem näher beschrieben.

Es wird ein Abbildungssystem zum Abbilden eines Objektes auf einen Bildsensor vorgeschlagen. Das Licht durchläuft insgesamt einen Strahlengang zwischen Objekt und Bildsensor, durch einen transparenten Träger, auf dem ein oder mehrere passive oder/und aktive optische Bauelemente angebracht sind. Diese optischen Bauelemente haben zum Ziel, durch ändern (schalten) des optischen Weges von der Eintrittslinse zum Sensor die optische Brennweite des Systems kontinuierlich oder diskret verstellen zu können.

In einem Abbildungssystem wird Licht durch eine räumliche Anordnung von optischen Elementen abgelenkt. Die Ablenkung des Lichts wird durch optischen Elemente erzielt, die unterschiedliche optische Effekte nutzen, etwa:

- Refraktion (Brechung; Richtungsänderung des Lichtes von einem durchsichtigen Medium in eine anderes, sofern es die Grenzfläche zwischen den Medien nicht senkrecht durchdringt);
- Diffraktion (Beugung); und
- Reflexion (Spiegelung; Zurückwerfung von Licht bei seinem Auftreffen auf eine Grenzfläche zwischen zwei Medien mit verschiedenen optischen Eigenschaften).

Die optischen Elemente können Linsen, Spiegel, Gitter, Hologramme, sowie andere Elemente mit optischen Eigenschaften sein, die für den gewünschten Strahlgang passend sind.

Am Ende des Strahlengangs, in der Bildebene, in die das Objekt mit Hilfe der Elemente abgebildet wird, befindet sich der Bildsensor. Dieser ist i. d. R. als Sensor der Typen CCD oder CMOS ausgeführt.

Das Abbildungssystem hat eine dem Objekt zugewandte Frontseite und eine vom Objekt abgewandte Rückseite, welche vom Objekt aus betrachtet hinter der Frontseite angeordnet ist.

An der Frontseite befindet sich eine Lichteintritts-Einrichtung, durch welche vom Objekt kommendes Licht in das Abbildungssystem eintreten kann. Diese Lichteintritts-Einrichtung kann z.B. als plane oder gekrümmte Fläche, als Linsensystem, als diffraktives optisches Element ausgebildet sein. Ebenso können diese Elemente optisch aktiv oder passiv sein.

Auch weist das Abbildungssystem mindestens ein erstes und ein zweites optisches Element auf. Diese sind derart an der Rückseite des Abbildungssystems angeordnet, dass sie den Strahlengang beeinflussen können.

Die Lichteintritts-Einrichtung weist ein elektrisch schaltbares Flüssigkristall-Element auf, welches den Strahlengang je nach elektrischem Schaltungszustand unter mindestens einem ersten Winkel und einem zweiten, vom ersten unterschiedlichen Winkel, ablenkt.

Der Strahlengang trifft dabei unter dem ersten Winkel auf das erste optische Element an der Rückseite und unter dem zweiten Winkel auf das zweite optische Element an der Rückseite.

Das elektrisch schaltbare Flüssigkristall-Element dient der Realisierung von mindestens zwei unterschiedlichen Brennweiten des Abbildungssystems. Die Einstellung der unterschiedlichen Brennweiten erfolgt bei der vorgeschlagenen Lösung durch die Änderung (Ablenkung) des Strahlengangs bei Durchtritt durch die Lichteintritts-Einrichtung. Dabei wird der Strahlengang so verändert, dass er jeweils über andere der im Abbildungssystem angeordneten optischen Elemente verläuft, d. h. für den jeweils gewünschten Strahlengang bzw. die jeweils gewünschte Brennweite werden die dazu passenden optischen Elemente genutzt. Kurz: Eine Richtungsänderung bewirkt einerseits eine Veränderung der optischen Weglänge und andererseits das "Einschalten" zusätzlicher oder neuer optischer Elemente im Strahlengang.

Der konkrete Strahlengang innerhalb des Systems ist abhängig davon, wie viele optische Elemente im Strahlengang angeordnet sind und wird durch deren spezifische optische Eigenschaften beeinflussen. Durch eine Mehrzahl von optischen Elementen, auch an der Frontseite, kann die Abbildungsqualität beeinflusst bzw. verbessert werden. Die Strahlen durchlaufen entlang des Strahlengangs die verschiedenen optischen Elemente. I. d. R. werden die Strahlen dabei abwechselnd an Front- und Rückseite reflektiert, wodurch eine "Faltung" des Strahlengangs realisiert wird.

Eine Möglichkeit der Ausbildung des elektrisch schaltbaren Flüssigkristall-Elements der Lichteintritts-Einrichtung besteht darin, dieses so zu gestalten, dass in diesem durch eine elektrische Ansteuerung ein periodisches Gitter von Bereichen eines Flüssigkristalls mit geordneter Ausrichtung von Flüssigkristall-Molekülen ausgebildet werden kann. Dadurch kann eintretendes Licht je nach Schaltungszustand unter einem bestimmten Winkel abgelenkt werden und einen vorgegebenen Strahlengang nehmen, der einer bestimmten Brennweite entspricht.

Auf Grund der Beugungseffekte an einem Gitter funktioniert diese Herangehensweise am besten für monochromatisches Licht. Für farbiges Licht ist eine Kompensation der Dispersion des Beugungsgitters notwendig, so z. B. über ein zweites Beugungsgitter oder aber durch ein refraktives Element (z. B. ein Prisma)

Monochromatisches Licht (griechisch: mono-chromos - "eine Farbe") ist Lichtstrahlung einer möglichst genau definierten Wellenlänge. Den Farbreiz monochromatischen Lichts bezeichnet man als Spektralfarbe. Monochromatisches Licht kann auf unterschiedliche Weise hergestellt werden, z. B. kann es aus polychromatischem Licht mit dessen spektraler Verteilung ausgefiltert werden. Die Bandbreite monochromatischen Lichts wird möglichst klein sein; sie kann aber niemals völlig verschwinden.

Ein Flüssigkristall ist eine Substanz, die einerseits flüssig ist wie eine Flüssigkeit, andererseits aber auch richtungsabhängige (anisotrope) physikalische Eigenschaften aufweist, wie ein Kristall. Diese besondere Kombination aus Fluidität und Anisotropie macht Flüssigkristalle technologisch interessant, vor allem für Flüssigkristall-Bildschirme, aber auch zunehmend für die Verwendung in optischen Elementen, z. B. in Flüssigkristall-Linsen. Flüssigkristalle entfalten ihre Eigenschaften i. d. R. gelöst in einem geeigneten Lösungsmittel, oft z. B. Wasser. Die meisten Flüssigkristalle sind optisch doppelbrechend.

In der Optik werden üblicherweise thermotrope Flüssigkristalle eingesetzt. Diese treten beim Erwärmen von bestimmten Substanzen beim Schmelzen als Zwischenphase (Mesophase) zwischen der festen und der flüssigen Phase auf. Derartige Substanzen können mit zunehmender Temperatur nacheinander mehrere unterschiedliche flüssigkristalline Phasen ausbilden, die sich durch ihre mikroskopische Struktur und ihr makroskopisches Erscheinen deutlich voneinander unterscheiden, so z. B.

- die nematische Phasen,
- die smektische Phasen,
- die kolumnare Phasen.

Die nematische Phase ist der einfachste Typ flüssigkristalliner Phasen. Die nematische Phase wird i. d. R. aus einem System mit langgestreckten, zigarrenförmigen Molekülen gebildet. In ihr weisen diese Moleküle eine Orientierungsordnung bezüglich eines so genannten Direktors, dem Einheitsvektor der Richtung, auf. Die daraus folgende Vorzugsorientierung ist in der Regel nur für kleine Volumina konstant. Die Vorzugsorientierungen der kleinen Volumina sind statistisch verteilt. Es tritt keinerlei Fernordnung auf. Auf einer makroskopischen Skala scheint eine isotrope Verteilung vorzuliegen.

Allgemein nehmen der Ordnungsgrad der Flüssigkristall-Moleküle und die damit verbundene Orientierungsfernordnung mit zunehmender Temperatur ab. Entsprechend sind die physikalischen Eigenschaften, wie z. B. der Brechungsindex von der Temperatur abhängig.

Die Moleküle einer nematischen Phase lassen sich allerdings durch ein elektrisches Feld ausrichten. Dadurch werden die Vorzugsrichtungen in den kleinen Volumina in der gleichen Richtung ausgerichtet, wodurch eine makroskopisch, anisotrope Ordnung entsteht. Diese Feld-induzierte Ausrichtung erfolgt ohne Temperatur-Änderungen, d. h. innerhalb der nematischen Phase, ohne einen temperatur-induzierten Phasenübergang.

In der makroskopisch geordneten Phase ist der Brechungsindex für die Polarisationsrichtung parallel zur Orientierung der Moleküle des Flüssigkristalls erhöht. Senkrecht zur Ausrichtung polarisiertes Licht wird blockiert bzw. stark absorbiert.

Die gezielte Ausrichtung der Flüssigkristall-Moleküle durch eine elektrische Schaltungsanordnung und damit die Änderung des Brechungsindexes erfolgt durch die Anbringung von Elektroden an das Flüssigkristall-Element. Diese Elektroden sind mit einer oder mehreren Spannungsquellen verbunden, die unabhängig voneinander ein- bzw. ausgeschaltet werden können.

Die Elektroden sind entsprechend der gewünschten Funktion strukturiert über die gesamte Fläche des Flüssigkristall-Elements aufgebracht. Beim Einschalten der Spannung wird über die Elektroden an dem Flüssigkristall-Element ein elektrisches Feld erzeugt, welches eine bereichsweise geänderte Ausrichtung der vororientierten Flüssigkristall-Moleküle hervorruft. Somit entstehen in dem Flüssigkristall-Element Bereiche mit einem unterschiedlichen Brechungsindex. Der Brechungsindex ist dabei in den Bereichen mit Orientierung der Flüssigkristall-Moleküle durch das elektrische Feld für eine geeignete Polarisationsrichtung erhöht.

Bei der vorgeschlagenen Lichteintritts-Einrichtung wird entsprechend der Struktur der Aufbringung der Elektroden auf dem Flüssigkristall-Element beim Einschalten der Spannung an den Elektroden in dem Flüssigkristall-Element z. B. die Struktur und Wirkung eines optischen Gitters erzeugt.

Ein optisches Gitter ist eine streng periodische Anordnung paralleler, äquidistanter Spalte, deren gegenseitiger Abstand in der Größenordnung der Lichtwellenlänge liegt. Dieser Abstand wird als Gitterkonstante g bezeichnet.

Mittels eines optischen Gitters lässt sich Lichtstrahlung mit hoher Auflösung nach Wellenlängen zerlegen und ein Beugungsspektrum erzeugen. Im Beugungsspektrum wächst der Ablenkwinkel $\alpha$ mit der Wellenlänge $\lambda$ des Lichtes gemäß

$$\sin\ \alpha\ =\ \frac{\lambda}{g}\,,$$

für das erste Beugungsmaximum bzw. die erste Ordnung der Beugung.

Mit Hilfe des in dem Flüssigkristall-Element elektrisch erzeugten optischen Gitters lässt sich somit eine gezielte Ablenkung des Lichtstrahls und damit eine Veränderung des Strahlengangs durch das System erreichen. Im Ergebnis dieser Änderung des Strahlengangs lassen sich unterschiedliche Brennweiten erzeugen. Dabei verläuft der Strahlengang über die für die Erzielung einer bestimmten Brennweite erforderlichen bzw. geeigneten optischen Elemente des Abbildungssystems.

Bei dem Flüssigkristall-Element ist der Flüssigkristall von einem - wo nötig - transparenten Gehäuse eingeschlossen. In oder der auf dieses werden die Elektroden aufgebracht. Diese sind i. d. R. als ITO-Leiterbahnen ausgeführt, die mit entsprechenden Spannungsquellen zu unterschiedlichen Leiterbahnen kombiniert werden können. ITO (Indiumzinnoxid; englisch indium tin oxide) ist ein halbleitender, im sichtbaren Licht weitgehend transparenter Stoff. Das Material ITO wird u. a. auch bevorzugt für die Herstellung transparenter Elektroden in Flüssigkristall-Bildschirmen verwendet.

In einer vorteilhaften Ausführung des vorgeschlagenen Abbildungssystems ist die elektrische Ansteuerung derart ausgebildet, dass sie in dem Flüssigkristall-Element Gitter von Bereichen des Flüssigkristalls mit geordneter Ausrichtung von Flüssigkristall-Molekülen mit unterschiedlichen Gitterperioden ausbilden kann.

Die unterschiedlichen Gitter-Perioden (Gitter-Konstanten) können u. a. dadurch erzeugt werden, dass die auf oder an dem Flüssigkristall-Element aufgebrachten Elektroden zu unterschiedlichen Leiterbahnen kombiniert werden. So ist es möglich, durch Aktivieren verschiedener Leiterbahnen die Abstände zwischen den geordneten Bereichen des Flüssigkristalls zu verändern. Dadurch ändern sich die Gitterkonstante g und - elektrisch schaltbar - der Ablenkwinkel $\alpha$. Diese Ausführung des vorgeschlagenen Abbildungssystems ermöglicht die Schaltung zwischen mindestens drei Brennweiten des Abbildungssystems:

- ohne angelegte Spannung,
- mit angelegter Spannung und erster Gitterkonstante und
- mit angelegter Spannung und zweiter Gitterkonstante.

Eine weitere Ausführung des Abbildungssystems ist vorteilhafter Weise derart gestaltet, dass die Lichteintritts-Einrichtung eine Linse und ein Flüssigkristall-Element aufweist.

Von Vorteil ist, dass diese Kombination von Linsen oder Linsengruppen und Flüssigkristall-Element derart gestaltet sein kann, dass die Linse oder Linsengruppe an der Außenseite des Systems angeordnet ist, während sich das Flüssigkristall-Element an der Innenseite der Lichteintritts-Einrichtung des Abbildungssystems befindet.

Die Flüssigkristalle in der oben beschriebenen Kombination einer Linse mit einem Flüssigkristall-Element können in dem erzeugten Gitter in Abhängigkeit von der Anordnung der ITO-Elektroden am Flüssigkristall-Element beim Einschalten der Spannung in unterschiedlichen Richtungen ausgerichtet werden.

Werden die Elektroden an der Ober- und Unterseite des Flüssigkristall-Elementes angebracht, dann ergibt sich eine Ausrichtung der Flüssigkristalle längs der optischen Achse der Linse. Dabei ist die erreichte Änderung des Brechungsindex relativ gering, jedoch ist sie unabhängig von der Polarisationsrichtung der einfallenden Lichtstrahlung.

An Stelle von nematischen Flüssigkristall-Systemen können auch Ferroelektrische Flüssigkristall-Systeme Verwendung finden.

Im Zusammenhang mit einer erfolgten Änderung des Strahlenganges innerhalb des Abbildungssystems ist davon auszugehen, dass, beugungsbedingt (Beugungsordnung 0) beim Passieren des Lichteintritts-Einrichtung eine abgeschwächte "Rest-Lichtstrahlung" verbleibt, die das Abbildungssystem entlang des ursprünglichen Strahlenganges passieren würde. Um dieses zu vermeiden, kann zwischen der Lichteintritts-Einrichtung und dem erstem optischen Element des Abbildungssystems eine Blockierung (z. B. Schieber, Shutter o. ä.) angeordnet sein, die ein Passieren der "Rest-Lichtstrahlung" entlang des ursprünglichen Strahlenganges verhindert. Das Aktivieren / Deaktivieren dieser Blockierung sollte gleichzeitig mit dem Schalten der Spannung für die Änderung des Strahlenganges erfolgen.

Das Flüssigkristall-Element kann das oben erwähnte Gitter sein; es können aber auch andere Flüssigkristall-Elemente sein, wie sie weiter unten erwähnt werden.

Die Lichteintritts-Einrichtung kann auch ein Fresnel-Element und ein Flüssigkristall-Element aufweisen, wobei die Lichteintritts-Einrichtung in dieser Ausgestaltung auch geeignet ist, den Strahlengang für polychromatisches Licht zu beeinflussen.

Als polychromatisches Licht (griechisch: polychromos, so viel wie "vielfarbig") bzw. Weißlicht wird Licht bezeichnet, welches aus einer Mischung unterschiedlicher Farben besteht. Polychromatisches Licht ist ein Gemisch aus vielen Wellenlängen.

Als Fresnel-Elemente kommen z. B. Fresnel-Linsen oder Fresnel-Gitter bzw. Fresnel-Prismen in Frage.

Eine Fresnel-Linse oder genauer eine Fresnelsche Stufenlinse ist eine optische Linse, bei der Gewicht und Volumen gegenüber einer üblichen optischen Linse bei gleichem Durchmesser und gleicher Brennweite verkleinert sind. Dies wirkt sich besonders bei Linsen mit kurzer Brennweite aus, die in normaler Form sehr dick und schwer sind. Die Verringerung des Volumens geschieht bei Fresnel-Linsen durch eine Aufteilung in ringförmige Bereiche. In jedem dieser Bereiche wird die Dicke verringert, sodass die Linse eine Reihe ringförmiger Stufen erhält. Da Licht nur beim Passieren der Linsen-Oberflächen gebrochen wird, ist der Brechungswinkel nicht von der Dicke, sondern nur vom Winkel zwischen den beiden Oberflächen abhängig. Die Linse behält ihre Brennweite bei, aber die Abbildungsqualität wird durch die Stufenstruktur geringfügig verschlechtert. Ein Fresnel-Gitter (treffender Fresnel-Prisma) ist eine parallele Anordnung von Glas-Keilen, ähnlich einer Fresnel-Linse, jedoch nicht mit einer kreisförmigen Anordnung, sondern mit einer parallel verlaufenden. Ein Fresnel-Gitter (treffender Fresnel-Prisma) kann polychromatisches Licht unter einem vorgegebenen Winkel ablenken.

Eine Kombination von Fresnel-Linse und Fresnel-Prisma ist möglich und bewirkt gleichzeitig eine Linsenwirkung und eine Ablenkwirkung.

Als allgemeines optisches Element zur Ablenk- und Formveränderung optischer Strahlen kann ein computergeneriertes optisches Element oder Computer Generiertes Hologramm (CGH) Verwendung finden. Damit können fast beliebige Strahlformen und Strahlrichtungen generiert werden.

Computer generierte Hologramme (CGH) sind wichtige Elemente der modernen Optik zur Generierung anwendungsspezifischer optischer Felder und Funktionen. Mit Hilfe von Mikro- und Nanostrukturen werden mit diesen Elementen vorgegebene Wellenfronten erzeugt, die mit Methoden der klassischen Optik nicht realisierbar sind. Anwendung finden CGH's u. a. in der interferometrischen Prüfung hochgenauer asphärischer Linsen oder für die Aufteilung eines Beleuchtungsstrahls in eine Vielzahl gleichheller Spots.

Bei einem computergenerierten Hologramm handelt es sich um ein individuell berechnetes Hologramm, das nach der Berechnung in eine Funktionsschicht eingeschrieben wird.

CGHs werden beispielsweise mit hoher Genauigkeit in Kunststoff-Substraten realisiert. Ein CGH kann durch die Änderung der lokalen optischen Eigenschaften beispielsweise eines Polymerträgers als Phasenhologramm gespeichert werden. Die unterschiedlichen lokalen optischen Eigenschaften der einzelnen Punkte können Reflexionseigenschaften, beispielsweise durch Oberflächentopographie, oder variierende optische Weglängen im Material der Funktionsschicht (Brechungsindizes), des Materials sein. Die gewünschten lokalen optischen Eigenschaften der einzelnen Punkte werden von einem Computer berechnet.

Derartige computergenerierte Hologramme bestehen aus einer oder mehreren Schichten von Punktematrizen beziehungsweise Punkteverteilungen. Die Punkteverteilung kann dabei als Amplitudenhologramm oder Phasenhologramm ausgebildet sein.

Das Abbildungssystem kann vorteilhafterweise derart gestaltet sein, dass die Lichteintritts-Einrichtung ein Computer Generiertes Hologramm (CGH) und ein Flüssigkristall-Element aufweist. Auch diese Anordnung ist geeignet, den Strahlengang für polychromatisches Licht zu beeinflussen.

Bedeckt man ein Fresnel-Element oder ein CGH mit einem Flüssigkristall, so kann der Brechungsindex des Flüssigkristalls elektrisch geschaltet werden. Er kann z. B. so geschaltet werden, dass einmal ein Brechungsindex-Sprung zwischen dem Material des Fresnel-Elements und dem Flüssigkristall vorhanden ist, wodurch das Fresnel-Element wirkt. Im anderen Schaltungszustand kann der Brechungsindex-Unterschied verschwinden, so dass das Fresnel-Element nicht wirkt. Auf diese Weise kann die Wirkung der Fresnel-Linse ein- und ausgeschaltet werden. Z. B. lenkt ein Fresnel-Gitter im eingeschalteten Zustand das Licht ab, und das Abbildungssystem hat damit eine erste Brennweite. Im ausgeschalteten Zustand kommt es z. B. zu keiner ablenkenden Wirkung, und das Abbildungssystem hat damit eine zweite Brennweite.

Ähnlich wie bei einem Fresnel-Gitter, kann die Wirkung des CGH ein- und ausgeschaltet werden. Hinzu kommt, dass bei einem holographischen Diffusor der Ablenkungswinkel über die elektrische Spannung gesteuert werden kann, die an den Flüssigkristall angelegt wird. Dies eröffnet weitere Möglichkeiten, Brennweiten zu realisieren.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    eine schematische Darstellung eines Abbildungssystems gemäß dem Stand der Technik;

Fig. 2    eine schematische Darstellung eines Abbildungssystems mit variabler Brennweite;

Fig. 3A    eine schematische Darstellung des Flüssigkristall-Elementes der Lichteintritts-Einrichtung zur Ablenkung von Lichtstrahlen im Zustand der ausgeschalteten Spannung an den Elektroden zweier unterschiedlicher Schaltkreise (Gruppe A bzw. Gruppe B);

Fig. 3B    eine schematische Darstellung des Flüssigkristall-Elementes der Lichteintritts-Einrichtung zur Ablenkung von Lichtstrahlen im Zustand der eingeschalteten Spannung an einer ersten Gruppe A der Elektroden;

Fig. 3C    eine schematische Darstellung des Flüssigkristall-Elementes der Lichteintritts-Einrichtung zur Ablenkung von Lichtstrahlen im Zustand im Zustand der eingeschalteten Spannung an einer zweiten Gruppe B der Elektroden;

Fig. 4    eine schematische Darstellung der Lichteintritts-Einrichtung in der bevorzugten Ausführungsform einer Linse mit einem Flüssigkristall-Element;

Fig. 5    eine schematische Darstellung der Lichteintritts-Einrichtung in der Form einer Linse mit einem Flüssigkristall-Element (Variante mit senkrecht zur optischen Achse der Linse ausgerichteten Flüssigkristallen);

Fig. 6    eine schematische Darstellung der Lichteintritts-Einrichtung mit einem Computer Generierten Hologramm (CGH) und einem Flüssigkristall-Element;

Fig. 7    eine schematische Darstellung der Lichteintritts-Einrichtung mit einem Fresnel-Prisma und einem Flüssigkristall-Element.

Fig. 1 zeigt schematisch ein Abbildungssystem 100 entsprechend dem bekannten Stand der Stand der Technik. Das gezeigte System 100 hat eine Frontseite 102 und eine Rückseite 104. An der Frontseite 102 befinden sich eine Frontlinse 106, zwei optische Elemente 108, 110, sowie der Bildsensor 112. Gegenüber an der Rückseite 104 des gezeigten Systems 100 sind das optische Element 114, das optische Element 116 und das optische Element 118 angeordnet. Die optischen Elemente 108, 110, 114, 116 und 118 können refraktive oder diffraktive, transmissive oder reflektive optische Eigenschaften sein. Dabei handelt es sich durchwegs um passive optische Elemente.

Der Strahlengang 120 verläuft vom Objekt (nicht dargestellt) durch die Frontlinse 106 zum ersten optischen Element 114 weiter über das zweite optische Element 108, das dritte optische Element 116, das vierte optische Element 110 und das fünfte optische Element 118 zum Bildsensor 112, auf welchem das Objekt abgebildet wird.

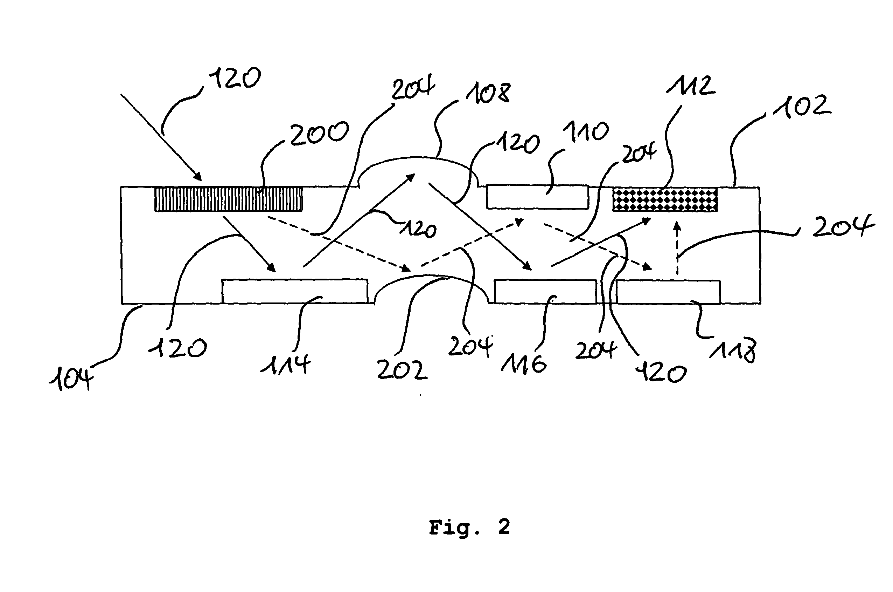

Auf Fig. 2 ist schematisch die optische Anordnung einer beispielhaften Ausführungsform des vorgeschlagenen Abbildungssystems 100 (z. B. eines Kamera-Moduls) mit variabler Brennweite dargestellt.

Das dargestellte System 100 hat eine Frontseite 102 und eine Rückseite 104. An der Frontseite 102 befinden sich eine Lichteintritts-Einrichtung 200, die ein Flüssigkristall-Element aufweist, zwei optische Elemente 108, 110, sowie der Bildsensor 112. Gegenüber an der Rückseite 104 des gezeigten Systems 100 sind vier optische Elemente 114, 202, 116 und 118 angeordnet. Die optischen Elemente 108, 110, 114, 202, 116 und 118 können refraktive oder diffraktive, transmissive oder reflektive, passive oder aktive optische Eigenschaften sein.

Ein erster Strahlengang 120 verläuft vom Objekt (nicht dargestellt) durch die Lichteintritts-Einrichtung 200 über die optischen Elemente 114, 108 und 116 zum Bildsensor 112, auf welchem das Objekt abgebildet wird. Dieser erste Strahlengang 120 ist durch eine erste Brennweite definiert.

Durch eine elektrische Ansteuerung des Flüssigkristall-Elementes der Lichteintritts-Einrichtung 200 kann eine Änderung des Ablenkwinkels der aus der Lichteintritts-Einrichtung 200 austretenden Lichtstrahlung, und somit eine Änderung des ursprünglichen Strahlengangs 120 bewirkt werden. Der dadurch realisierte veränderte Strahlengang 204 verläuft nun ab der Lichteintritts-Einrichtung 200 über die optischen Elemente 202, 110 und 118 zum Bildsensor 112, auf welchem das Objekt abgebildet wird. Dieser zweite (veränderte) Strahlengang 204 ist durch eine zweite, von der ersten abweichende, Brennweite gekennzeichnet.

Somit wird durch diese Umschaltung zwischen zwei unterschiedlichen Strahlengängen 120 und 204 innerhalb des beschriebenen Abbildungssystems 100 beispielsweise ein diskret schaltbares Abbildungssystem mit zwei verschiedenen Brennweiten realisiert.

Dabei sind in Abhängigkeit von der Struktur der Anordnung und der Leiterbahnen der auf dem Flüssigkristall-Element der Lichteintritts-Einrichtung 200 angebrachten Elektroden, sowie von der Anordnung der optischen Elemente im Strahlengang 120, 204 des Abbildungssystems 100 auch mehr als zwei diskret schaltbare unterschiedliche Brennweiten realisierbar.

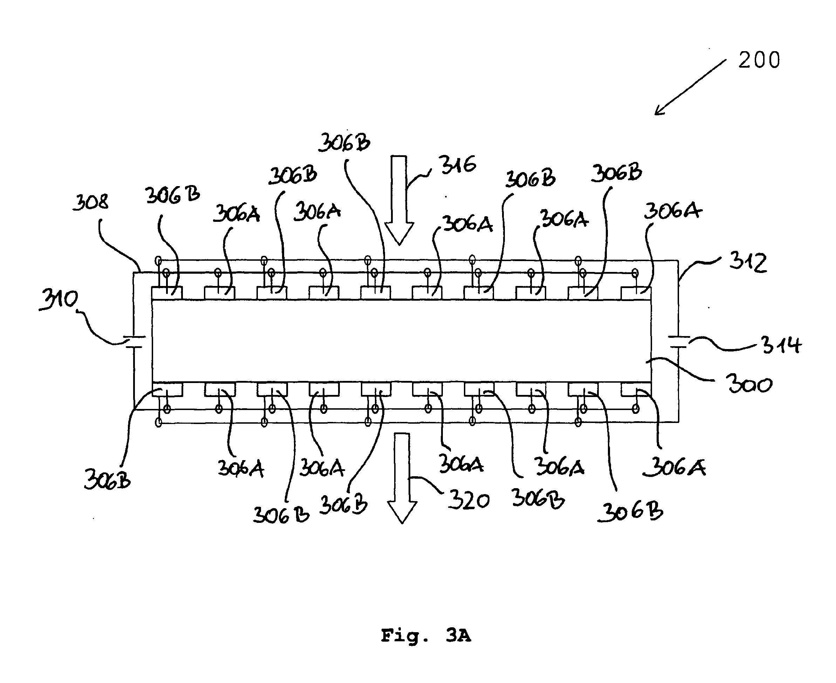

In Fig. 3A ist schematisch ein Flüssigkristall-Element 300 der Lichteintritts-Einrichtung 200 dargestellt. An der frontalen Oberfläche 302 und der unteren Oberfläche 304 des Flüssigkristall-Elementes 300 sind die Elektroden 306A, 306B zur Generierung der erforderlichen elektrischen Felder des Flüssigkristall-Elementes 300 aufgebracht. Alle Elektroden 306A, 306B haben einen konstant gleichen Abstand zueinander.

Die Elektroden 306A und 306B sind unterschiedlichen Schaltkreisen zugeordnet. Dabei sind alle Elektroden 306A und 306B über erste Leiterbahnen 308 miteinander verbunden, die durch die Spannungsquelle 310 versorgt werden.

Gleichzeitig sind die Elektroden 306B über zweite Leiterbahnen 312 miteinander verbunden, der durch die Spannungsquelle 314 versogt werden. In diesem Schaltkreis ist jedoch nur jedes zweite Paar Elektroden mit der Spannungsquelle 314 verbunden.

Die Spannungsquellen 310 und 314 sind in der Darstellung ausgeschaltet. Daraus resultiert, dass in der gezeigten Darstellung der Flüssigkristall des Elementes 300 eine isotrope Verteilung der Vorzugsrichtungen hat. Das Flüssigkristall-Element 300 hat in dieser Phase eine homogene Struktur hinsichtlich des Brechungskoeffizienten, so dass die Lichtstrahlung 316 das Flüssigkristall-Element 300 ohne Ablenkung passieren kann.

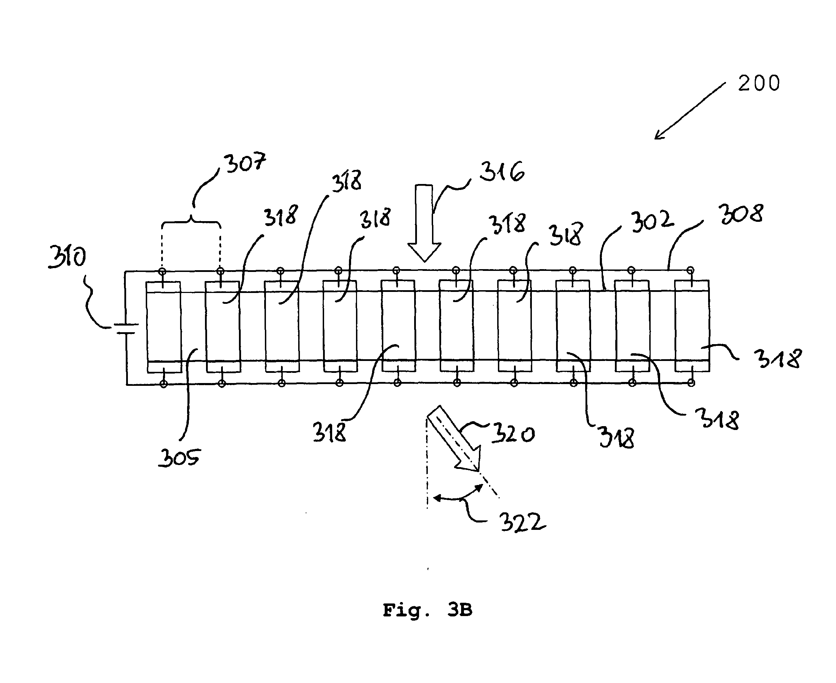

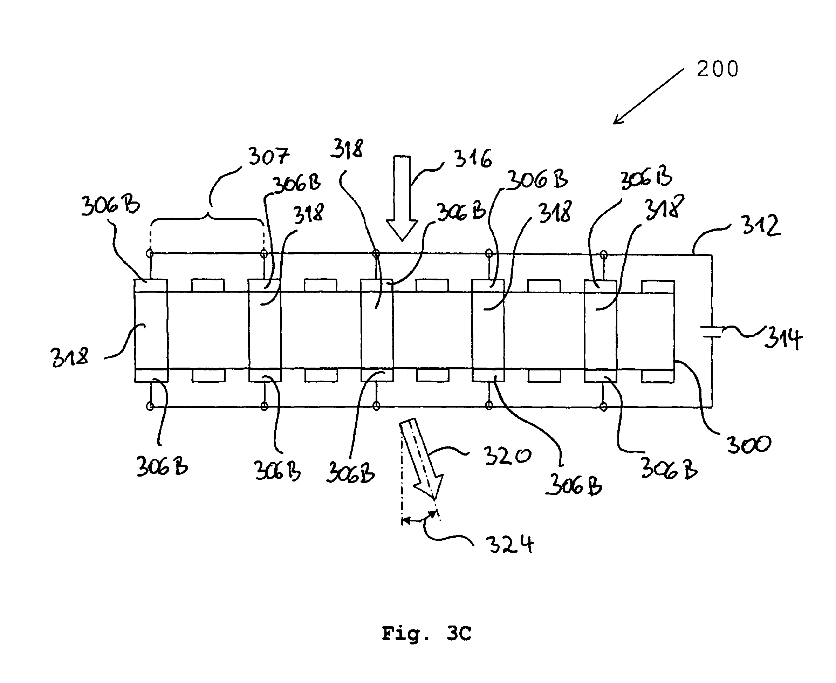

Die Figuren 3B und 3C zeigen schematisch das Flüssigkristall-Element 300 jeweils bei eingeschalteter Spannungsquelle 310 bzw. 314.

In Fig. 3B werden durch das Einschalten der Spannungsquelle 310 über den Leiterbahnen 308 alle Elektroden 306A und 306B aktiviert. Dabei werden in dem Flüssigkristall-Element 300 im Bereich des elektrischen Feldes der jeweiligen Elektrodenpaare zwischen Front- und Unterseite 302, 304 des Flüssigkristall-Elementes 300 Bereiche 318 mit streng geordneter Ausrichtung der Flüssigkristall-Moleküle erzeugt. Diese Bereiche 318 haben einen veränderten optischen Brechungsindex gegenüber den Bereichen 305, die sich nicht im elektrischen Feld der Elektroden 306A, 306B befinden.

Diese Konstellation der Bereiche 318 mit einem definiert anderen Brechungsindex gegenüber den übrigen Bereichen 305 bewirkt, dass das Flüssigkristall-Element 300 die Wirkung eines optischen Gitters aufweist, welches eine Gitterkonstante g bzw. Gitterabstand 307 hat.

Durch dieses elektrisch erzeugte optische Gitter erfolgt eine Beugung der Lichtstrahlung am Gitter. Dadurch wird eine Ablenkung (Richtungsänderung) der Lichtstrahlung 320 nach dem Passieren des Flüssigkristall-Elementes 300 unter einem definierten Winkel 322 hervorgerufen.

In Fig. 3C werden beim Einschalten der Spannungsquelle 314 jeweils nur die Elektroden 306B aktiviert. Dadurch entsteht in dem Flüssigkristall-Element 300 ein optisches Gitter, welches eine andere Gitterkonstante 307 als beim Einschalten der Spannungsquelle 310 aufweist, da die Abstände 307 zwischen den Elektroden 306B größer sind, als die Abstände aller Elektroden 306A, 306B im Schaltkreis 308 untereinander. Daraus resultiert ein anderer Ablenkwinkel 324 der austretenden Lichtstrahlung 320 nach dem Passieren des Flüssigkristall-Elementes 300.

Die in den Figuren 3A bis 3C schematisch dargestellte beispielhafte Lösung ermöglicht es, bei Verwendung eines Flüssigkristall-Elementes 300 und Nutzung seiner optischen Eigenschaften, durch einen elektrischen Schaltvorgang eine unterschiedliche Ablenkung 322 bzw. 324 der austretenden Lichtstrahlung 320 nach dem Passieren des Flüssigkristall-Elementes 300 zu bewirken. Dadurch kann der Strahlengang 120, 204 innerhalb eines Abbildungssystems 100 variabel gestaltet werden. Es werden jeweils unterschiedliche optische Elemente des Systems 100 in den Strahlengang 120, 204 einbezogen und somit lassen sich zwei oder mehr unterschiedliche Brennweiten des Systems 100 realisieren.

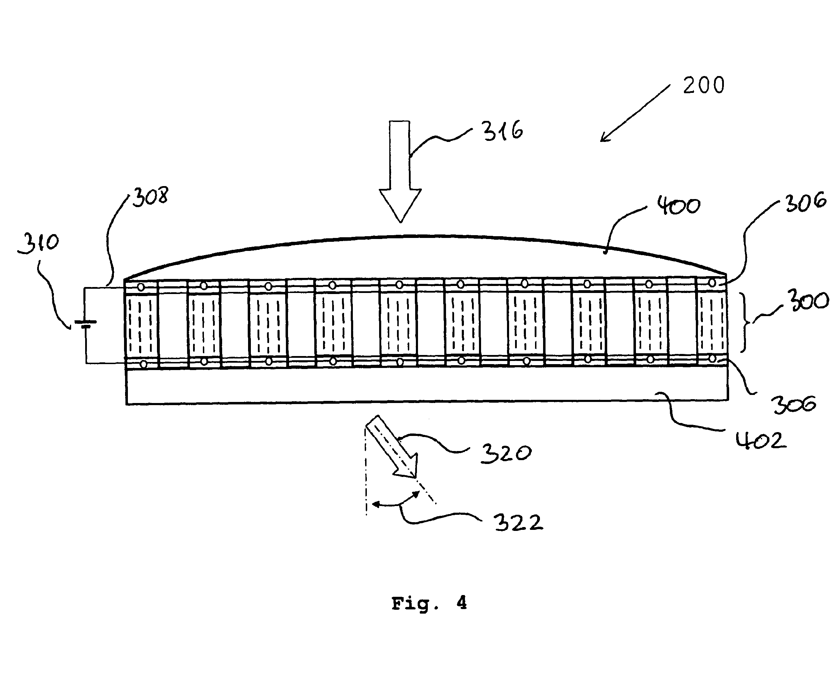

Die in Fig. 4 schematisch dargestellte bevorzugte Ausführungsform der Lichteintritts-Einrichtung 200 weist eine Linse 400 in Kombination mit einem Flüssigkristall-Element 300 auf. Das Flüssigkristall-Element 300 mit den daran angebrachten ITO-Elektroden 306 kann dabei auch zwischen der Linse 400 und einer Glasplatte 402 angeordnet sein. In dem gezeigten Beispiel wird der Strahlengang der objektseitig eintretenden Lichtstrahlung 316 sowohl durch die Linse 400 als auch elektronisch durch Einschalten der Spannungsquelle 310 beeinflusst. Die ITO-Elektroden 306 sind über die Leiterbahnen 308 mit der Spannungsquelle 310 verbunden. Beim Einschalten der Spannungsquelle 310 werden die ITO-Elektroden 306 aktiviert und es erfolgt zusätzlich zur optischen Wirkung der Linse 400 noch eine Änderung des Ablenkwinkels 322 der austretenden Lichtstrahlung 320 in Abhängigkeit von der Veränderung der optischen Eigenschaf-

## EP 2 537 060 B1

ten des Flüssigkristall-Elementes 300, die durch das Aktivieren der Elektroden 306 beim Einschalten der Spannungsquelle 310 bewirkt wird, sinngemäß wie es bereits in den Figuren 3A bis 3C beschrieben wurde. Die hier beschriebene bevorzugte Ausführungsform ist unanhängig von der Polarisationsrichtung der einfallenden Lichtstrahlung 316.

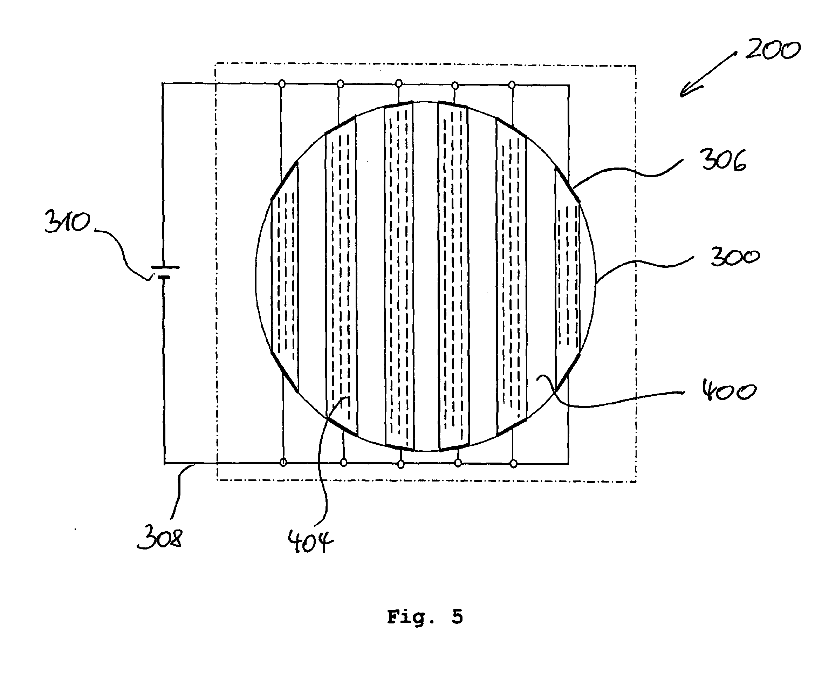

In Fig. 5 wird schematisch (Draufsicht) eine weitere mögliche Ausführungsform einer Lichteintritts-Einrichtung 200 mit einer Linse 400 in Kombination mit einem Flüssigkristall-Element 300 gezeigt. Im Unterschied zu Fig. 4 sind bei dieser Variante die ITO-Elektroden 306 seitlich am Flüssigkristall-Element 300 angeordnet. Die ITO-Elektroden 306 sind ebenfalls über die Leiterbahnen 308 mit der Spannungsquelle 310 verbunden. Beim Einschalten der Spannung 310 werden durch die entstehenden elektrischen Felder zwischen den ITO-Elektroden 306 die Flüssigkristalle 404 senkrecht zur optischen Achse der Linse 400 bzw. Ausbreitungsrichtung des Lichts 316 (s. Fig. 3A) angeordnet. Somit entsteht bei aktivierten ITO-Elektroden 306 in dem Flüssigkristall-Element 300, ebenfalls wie in Fig. 4, ein optisches Gitter, jedoch sind in diesem Falle die Flüssigkristalle 404 in den Bereichen zwischen den ITO-Elektroden 306 senkrecht zur optischen Achse der Linse 400 ausgerichtet. Diese Ausführungsform ist insbesondere dadurch charakterisiert, dass beim Schalten der Spannung 310 eine verhältnismäßig große Änderung des Brechungsindex erreicht werden kann, wenn die einfallende Lichtstrahlung 316 (s. Fig. 3A) parallel zur Richtung der geordneten Flüssigkristalle polarisiert ist - bzw. für die entsprechend polarisierte Komponente des Lichts. Das hat eine starker Abhängigkeit des Brechungsindex (und somit der Größe des Änderungswinkels 322) von der Polarisation des einfallenden Lichtes 316 zur Folge. Senkrecht zur Ausrichtung des Flüssigkristalls polarisiertes Licht wird teilweise absorbiert und teilweise abgelenkt. Die Intensität des abgelenkten Teils ist jedoch kleiner als für die parallele Polarisationsrichtung. Der Winkel ist jedoch für beide Polarisationsrichtungen derselbe.

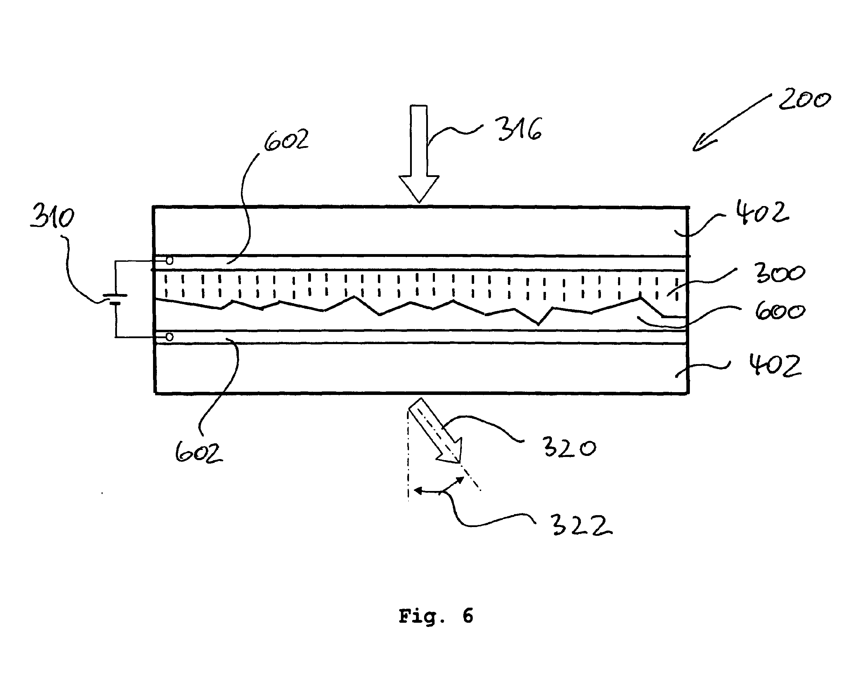

Die in Fig. 6 schematisch dargestellte Lichteintritts-Einrichtung 200 weist ein Flüssigkristall-Element 300 in Kombination mit einem Computer Generierten Hologram (CGH) 600 auf. Die Kombination aus Flüssigkristall-Element 300 und CGH 600 ist zwischen den zu beiden Seiten angebrachten ITO-Flächenelektroden 602 angeordnet. Das CGH 600 kann beispielsweise aus Kunststoff gefertigt sein. Beiderseits außen an dieser Anordnung kann jeweils noch eine Glasplatte 402 befestigt sein. Der Strahlengang der objektseitig eintretende Lichtstrahlung 316 wird sowohl durch die optischen Eigenschaften des Flüssigkristall-Elementes 300 als auch des CGH 600 bestimmt. Die optischen Eigenschaften (Brechungsindex) des Flüssigkristall-Elementes 300 werden elektronisch durch Ein- bzw. Ausschalten der Spannungsquelle 310 verändert, indem die ITO-Elektroden 602 aktiviert bzw. deaktiviert werden. Dadurch kann elektronisch der Strahlengang der austretenden Lichtstrahlung 320, d. h. der Ablenkwinkel 322 geändert werden. Die Änderung der optischen Eigenschaften des Flüssigkristall-Elementes 300 durch das Aktivieren bzw. Deaktivieren der ITO-Elektroden 602 erfolgt sinngemäß wie oben bereits beschrieben.

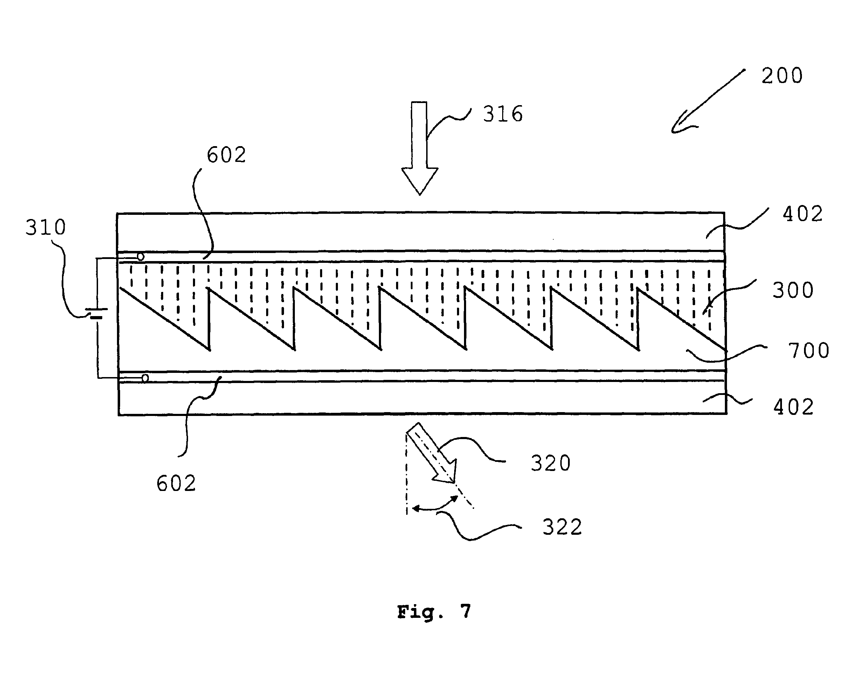

Die in Fig. 7 schematisch dargestellte Lichteintritts-Einrichtung 200 weist ein Flüssigkristall-Element 300 in Kombination mit einem Fresnel-Prisma 700 auf.

Die Kombination aus Flüssigkristall-Element 300 und Fresnel-Prisma 700 ist zwischen den oben und unten aufgebrachten ITO-Flächenelektroden 602 angeordnet. Beiderseits außen, d. h. ganz oben oder unten, an dieser Anordnung kann jeweils noch eine Glasplatte 402 vorhanden sein. Der Strahlengang der objektseitig eintretenden Lichtstrahlung 316 wird sowohl durch die optischen Eigenschaften des Flüssigkristall-Elementes 300 als auch des Fresnel-Prismas 700 bestimmt. Die elektronische Veränderung der optischen Eigenschaften (Brechungsindex) des Flüssigkristall-Elementes 300 erfolgt sinngemäß wie in Fig. 6. Es ergibt sich eine Ablenkung 322 des Lichtstrahls. Bei ausgeschaltetem elektrischen Feld ist zum Beispiel die Beugungsstruktur des Gitters wirksam, bei Anlegen eines geeigneten elektrischen Feldes ändert sich der Brechungsindex des Flüssigkristall-Elementes zum gleichen Wert wie der des Kunststoffs des Fresnel-Prismas 700 und beseitigt damit die ablenkende Wirkung.

Der Grad der Ausrichtung des Flüssigkristalls hängt von der Höhe der angelegten Spannung ab. Der Grad der Ausrichtung bestimmt aber auch die Stärke der Änderung des Brechnungsindex. Damit hängt die Änderung des Brechnungsindex von der Höhe der angelegten Spannung ab. Die Änderung des Brechungsindex hat bei einem Fresnel-Prismas 700 Einfluss auf den Ablenkungswinkel 322. Daher ist der Ablenkungswinkel über die Höhe der angelegte Spannung steuerbar. Dies eröffnet die Möglichkeit, weitere Brennweiten zu realisieren.

zitierte Literatur

J. Jahns: "Integrated optical imaging system", Appl. Opt. 29 (1990) 1998

Bezugszeichen

| | |
|---|---|
| 100 | Abbildungssystem |
| 102 | Frontseite |

8

(fortgesetzt)

| | |
|------|------|
| 104 | Rückseite |
| 106 | Frontlinse |
| 108 | optisches Element |
| 110 | optisches Element |
| 112 | Bildsensor |
| 114 | optisches Element |
| 116 | optisches Element |
| 118 | optisches Element |
| 120 | Strahlengang |
| 200 | Lichteintritts-Einrichtung |
| 202 | optisches Element |
| 204 | Strahlengang (geändert) |
| 300 | Flüssigkristall-Element |
| 302 | frontale Oberfläche des Flüssigkristall-Elements |
| 304 | untere Oberfläche des Flüssigkristall-Elements |
| 305 | Bereich mit nematisch vororientierten Flüssigkristall-Molekülen |
| 306 | ITO-Elektrode |
| 306A | ITO-Elektrode (verbunden mit einer ersten Spannungsquelle) |
| 306B | ITO-Elektrode (verbunden mit einer zweiten Spannungsquelle) |
| 307 | Elektrodenabstand, Gitterabstand, Gitterperiode |
| 308 | Schaltkreis bzw. Leiterbahn des Schaltkreises |
| 310 | erste Spannungsquelle |
| 312 | Schaltkreis bzw. Leiterbahn des Schaltkreises |
| 314 | zweite Spannungsquelle 2 |
| 316 | eintretende Lichtstrahlung (objektseitig) |
| 318 | Bereich mit elektrisch geordneter Ausrichtung der Flüssigkristall-Moleküle |
| 319 | Gitterperiode, Gitterabstand |
| 320 | austretende Lichtstrahlung |
| 322 | Ablenkwinkel, Ablenkung |
| 324 | Ablenkwinkel, Ablenkung |
| 400 | Linse |
| 402 | Glasplatte |
| 404 | ausgerichtete Flüssigkristalle |
| 600 | Computer Generiertes Hologramm |
| 602 | ITO-Flächenelektrode |
| 700 | Fresnel-Prisma |

**Patentansprüche**

1. Abbildungssystem (100) zum Abbilden eines Objektes auf einen Bildsensor (112), wobei das Licht einen Strahlengang (120, 204) zwischen Objekt und Bildsensor (112) durchläuft, wobei das Abbildungssystem (100) folgendes aufweist: einen transparenten träger;

   a) eine dem Objekt zugewandte Frontseite (102) des trägers;
   b) eine vom Objekt abgewandte Rückseite (104) des trägers, welche vom Objekt aus betrachtet hinter der Frontseite (102) des trägers angeordnet ist;
   c) eine Lichteintritts-Einrichtung (200) an der Frontseite (102) des trägers, durch welche vom Objekt kommendes Licht in das Abbildungssystem (100) eintreten kann;
   d) mindestens ein erstes und ein zweites optisches Element (114, 202), welche derart an der Rückseite des trägers angeordnet sind,
   dass sie den Strahlengang (120, 204) beeinflussen können;

*dadurch gekennzeichnet,*

e) **dass** die Lichteintritts-Einrichtung (200) ein elektrisch schaltbares Flüssigkristall-Element (300) aufweist, welches den Strahlengang (120; 204) je nach elektrischem Schaltungszustand unter mindestens einem ersten Winkel (322) und einem zweiten,

vom ersten unterschiedlichen Winkel (324) ablenkt;

f) wobei der Strahlengang (120, 204) unter dem ersten Winkel (322) auf das erste optische Element (114) an der Rückseite des trägers trifft und unter dem zweiten Winkel (324) auf das zweite optische Element (202) an der Rückseite (104) des trägers;

g1) wobei beim Auftreffen des Strahlenganges (120, 204) auf das erste optische Element (114) an der Rückseite des Abbildungssystems (100) unter dem ersten Winkel (322) eine erste Brennweite des Abbildungssystems (100) erzielt wird, und

g2) wobei beim Auftreffen des Strahlenganges auf das zweite optische Element (202) an der Rückseite (104) des Abbildungssystems (100) unter dem zweiten Winkel (324) eine zweite, von der ersten unterschiedliche Brennweite des Abbildungssystems (100) erzielt wird.

2. Abbildungssystem (100) nach dem vorhergehenden Anspruch, **dadurch gekennzeichnet,** **dass** in dem Flüssigkristall-Element (300) der Lichteintritts-Einrichtung (200) durch eine elektrische Ansteuerung (310, 314) ein periodisches Gitter von Bereichen (318) eines Flüssigkristalls mit geordneter Ausrichtung von Flüssigkristall-Molekülen ausgebildet werden kann.

3. Abbildungssystem (100) nach dem vorhergehenden Anspruch, **dadurch gekennzeichnet,** **dass** die elektrische Ansteuerung (310, 314) derart ausgebildet ist, dass sie durch jeweils unterschiedliche Ansteuerung in dem Flüssigkristall-Element (300) Gitter von Bereichen (318) des Flüssigkristalls mit geordneter Ausrichtung der Flüssigkristall-Moleküle mit unterschiedlichen Gitterperioden (307) ausbilden kann.

4. Abbildungssystem (100) nach einem der vorhergehenden Ansprüche, **dadurch gekennzeichnet,** **dass** die Lichteintritts-Einrichtung (200) eine Linse (400) und ein Flüssigkristall-Element (300) aufweist.

5. Abbildungssystem (100) nach einem der vorhergehenden Ansprüche, **dadurch gekennzeichnet,** **dass** die Lichteintritts-Einrichtung (200) ein Fresnel-Element (700) und ein Flüssigkristall-Element (300) aufweist.

6. Abbildungssystem (100) nach einem der vorhergehenden Ansprüche, **dadurch gekennzeichnet,** **dass** die Lichteintritts-Einrichtung (200) ein Computer Generiertes Hologramm (600) und ein Flüssigkristall-Element (300) aufweist.

**Claims**

1. Imaging system (100) for imaging an object onto an image sensor (112), wherein the light traverses a beam path (120, 204) between object and image sensor (112), wherein the imaging system (100) comprises the following:

   a transparent base;

   a) a front side (102) of the base facing the object;
   b) a rear side (104) of the base facing away from the object, said rear side being arranged behind the front side (102) of the base as viewed from the object;
   c) a light entrance device (200) at the front side (102) of the base, through which light coming from the object can enter into the imaging system (100);
   d) at least one first and one second optical element (114, 202), which are arranged at the rear side of the base in such a way that they can influence the beam path (120, 204);
   **characterized**
   e) **in that** the light entrance device (200) has an electrical switchable liquid crystal element (300), which deflects the beam path (120; 204) at at least one first angle (322) and a second angle (324), which is different from the first, depending on the electrical switching state;

f) wherein the beam path (120, 204) impinges on the first optical element (114) at the rear side of the base at the first angle (322) and on the second optical element (202) at the rear side (104) of the base at the second angle (324);

> g1) wherein when the beam path (120, 204) impinges on the first optical element (114) at the rear side of the imaging system (100) at the first angle (322), a first focal length of the imaging system (100) is obtained, and
>
> g2) wherein when the beam path impinges on the second optical element (202) at the rear side (104) of the imaging system (100) at the second angle (324), a second focal length, different from the first, of the imaging system (100) is obtained.

2. Imaging system (100) according to the preceding claim, **characterized in that** a periodic grating of regions (318) of a liquid crystal with ordered alignment of liquid crystal molecules can be formed in the liquid crystal element (300) of the light entrance device (200) by an electrical driving arrangement (310, 314).

3. Imaging system (100) according to the preceding claim, **characterized in that** the electrical driving arrangement (310, 314) is embodied in such a way that it can form gratings of regions (318) of the liquid crystal with ordered alignment of the liquid crystal molecules with different grating periods (307) by respectively different driving in the liquid crystal element (300).

4. Imaging system (100) according to one of the preceding claims, **characterized in that** the light entrance device (200) has a lens (400) and a liquid crystal element (300).

5. Imaging system (100) according to one of the preceding claims, **characterized in that** the light entrance device (200) has a Fresnel element (700) and a liquid crystal element (300).

6. Imaging system (100) according to one of the preceding claims, **characterized in that** the light entrance device (200) has a computer generated hologram (600) and a liquid crystal element (300).

**Revendications**

1. Système d'imagerie (100) pour former l'image d'un objet sur un capteur d'image (112), dans lequel la lumière parcourt une trajectoire de faisceau (120, 204) entre l'objet et le capteur d'image (112), dans lequel le système d'imagerie (100) présente les éléments suivants :

   un support transparent ;

   a) une face avant (102) du support tournée vers l'objet ;
   b) une face arrière (104) du support opposée à l'objet, qui est aménagée derrière la face avant (102) du support en partant de l'objet ;
   c) un dispositif d'entrée de lumière (200) sur la face avant (102) du support, par lequel la lumière venant de l'objet peut pénétrer dans le système d'imagerie (100) ;
   d) au moins un premier et un second élément optique (114, 202), qui sont agencés sur la face arrière du support de sorte qu'ils puissent influencer la trajectoire de faisceau (120, 204) ;
   **caractérisé en ce que** :
   e) le dispositif d'entrée de lumière (200) présente un élément à cristal liquide (300) qui peut être commuté électriquement et qui dévie la trajectoire de faisceau (120 ; 204) en fonction de l'état de commutation électrique sous au moins un premier angle (322) et un second angle (324) différent du premier ;
   f) dans lequel la trajectoire de faisceau (120, 204) rencontre, sous le premier angle (322), le premier élément optique (114) sur la face arrière du support et, sous le second angle (324), le second élément optique (202) sur la face arrière (104) du support ;

   > g1) dans lequel, lors de la rencontre de la

trajectoire de faisceau (120, 204) avec le premier élément optique (114) sur la face arrière du système d'imagerie (100) sous le premier angle (322), on obtient une première distance focale du système d'imagerie (100), et

g2) dans lequel, lors de la rencontre de la

trajectoire de faisceau avec le second élément optique (202) sur la face arrière (104) du système d'imagerie (100) sous le second angle (324), on obtient une seconde distance focale du système d'imagerie (100) différente de la première.

2.  Système d'imagerie (100) selon la revendication précédente,
    **caractérisé en ce que**
    dans l'élément à cristal liquide (300) du dispositif
    d'entrée de lumière (200), il peut être formé par commande électrique (310, 314), un réseau périodique de zones (318) d'un cristal liquide avec une orientation ordonnée de molécules de cristal liquide.

3.  Système d'imagerie (100) selon la revendication précédente,
    **caractérisé en ce que**
    la commande électrique (310, 314) est formée de
    manière qu'elle puisse créer par commande respectivement différente dans l'élément à cristal liquide (300), un réseau de zones (318) du cristal liquide avec une orientation ordonnée des molécules de cristal liquide avec différentes périodes de réseau (307).

4.  Système d'imagerie (100) selon l'une quelconque des revendications précédentes,
    **caractérisé en ce que**
    le dispositif d'entrée de lumière (200) présente une
    lentille (400) et un élément à cristal liquide (300).

5.  Système d'imagerie (100) selon l'une quelconque des revendications précédentes,
    **caractérisé en ce que**
    le dispositif d'entrée de lumière (200) présente un
    élément de Fresnel (700) et un élément à cristal liquide (300).

6.  Système d'imagerie (100) selon l'une quelconque des revendications précédentes,
    **caractérisé en ce que**
    le dispositif d'entrée de lumière (200) présente un
    hologramme généré par ordinateur (600) et un élément à cristal liquide (300).

Fig. 1 (Stand der Technik)

120

204 108

200 120 110 112 102

120

120

204 204

104 120 114 202 204 116 204 120 118

**Fig. 2**

Fig. 3A

Fig. 3B

EP 2 537 060 B1

Fig. 3C

EP 2 537 060 B1

Fig. 4

EP 2 537 060 B1

Fig. 5

Fig. 6

EP 2 537 060 B1

Fig. 7

EP 2 537 060 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **B. J. JAHNS.** Integrated optical imaging system. *Appl. Opt.,* 1990, vol. 29, 1998

- **J. JAHNS.** Integrated optical imaging system. *Appl. Opt.,* 1990, vol. 29, 1998